# EUROPÄISCHE PATENTSCHRIFT

(11) **EP 1 855 036 B1**
(45) Veröffentlichungstag und Bekanntmachung des Hinweises auf die Patenterteilung: **24.02.2010**
(21) Anmeldenummer: 07004858.2
(22) Anmeldetag: 09.03.2007
(51) Int. Cl.: F16K 1/36, F16K 1/42, E03B 9/14

(54) **Ventileinsatz für eine frostsichere Außenarmatur und frostsichere Außenarmatur**
Valve insert for a frost-proof outside tap and frost-proof outside tap
Insert d'une soupape pour un robinet extérieur protégé contre le gel et robinet extérieur protégé contre le gel

(30) Priorität: 09.05.2006 DE 102006021813
(43) Veröffentlichungstag der Anmeldung: 14.11.2007
(73) Patentinhaber: Honeywell Technologies Sarl, 1110 Morges (CH)
(72) Erfinder: Pfeiffer, Uwe, 74834 Elztal (DE); Zelenka, Pavel, 63900 Brno (CZ)
(74) Vertreter: Graefe, Jörg

(56) Entgegenhaltungen:
- EP-A1- 0 597 711
- DE-A1- 1 550 566
- DE-A1- 4 214 500
- DE-A1- 19 912 677
- US-B1- 6 805 154

## Beschreibung

Die vorliegende Erfindung betrifft einen Ventileinsatz für eine frostsichere Außenarmatur sowie eine frostsichere Außenarmatur.

Armaturen außerhalb von Gebäuden (Außenarmaturen) sind in bestimmten Klimazonen gegen die Gefahr des Einfrierens zu sichern. Dies kann manuell durch eine Absperrung und Entleerung der Armatur durch den Benutzer zu Beginn der kalten Jahreszeit erfolgen. In jedem Fall komfortabler und betriebssicherer ist es, wenn die Armatur an sich gegen Einfrieren geschützt ist, d.h. wenn die Armatur ihre frostanfälligen Bereiche nach jeder Wasserentnahme selbsttätig entleert. Solche Armaturen werden als frostsichere Außenarmaturen oder frostsichere Wasserarmaturen bezeichnet.

Eine solche Armatur ist beispielsweise aus der deutschen Offenlegungsschrift mit der Veröffentlichungsnummer DE 199 12 677 A1 bekannt. Dieser und anderen bekannten Armaturen gemeinsam ist das Problem, dass eine Wartung oder Reparatur des innenliegenden Ventils und ggf. zusätzlichen Rückflussverhinderers nicht oder nur sehr schwer möglich ist.

Zur Vereinfachung von Wartungszwecken bietet sich an, einen Ventileinsatz zu verwenden, der im Ganzen mit der Armatur verwendbar ist.

Solche Ventileinsätze sind vielfältig bekannt. Aus der deutschen Patentschrift mit der Veröffentlichungsnummer DE 10 2004 005 379 B3 ist eine Ventileinheit beschrieben, dort als Expansionsventil für Kälteanlagen, in dem zumindest das Regulierventil und die das Regulierventil steuernde Betätigungseinrichtung eine Einheit bilden, welche gemeinsam in ein Gehäuse einsetzbar ist. Die Betätigungseinrichtung wirkt hier anhand des Zustandes des Kältemittels in einem zweiten Kanal auf einen ersten Kanal ein, wobei die Betätigung wie auch die Steuerung der Betätigung innerhalb des durch das Gehäuse begrenzten Systems erfolgen. Eine Betätigung durch einen Bediener von außen, wie für eine Absperrarmatur zwingend erforderlich, ist hiermit jedoch nicht möglich.

Die deutsche Patentschrift mit der Veröffentlichungsnummer DE 37 22 665 C2 behandelt ein Ventil zur Rückflussverhinderung, bei dem die Funktionsteile des Ventils in einem gemeinsamen Grundkörper angeordnet sind, um damit gemeinsam in ein Außengehäuse eingebracht zu werden. Der Grundkörper wird beispielsweise in das Außengehäuse gesteckt und dort rastend gehalten. Es ist jedoch nicht ohne weiteres möglich, den Grundkörper, zumal aus einer größeren Entfernung, zu Wartungs- und Austauschzwecken aus dem Außengehäuse zu entfernen.

Die deutsche Patentschrift mit der Veröffentlichungsnummer DE 693 19 147 T2 offenbart eine sanitäre Kupplungsvorrichtung, bei der ein Kupplungsgehäuse zur Aufnahme eines Rohres beschrieben ist. In einem Abstand zum Gehäuse ist ein Ring mit einer Klemmhülse vorgesehen, wobei die Klemmhülse federnde Finger aufweist, um das eingeschobene Rohr zu halten. Ferner enthält die Kupplung an dem Ring Freigabemittel, die es erlauben, die federnden Finger der Klemmhülse vom eingeschobenen Rohr zu lösen, so dass dieses wieder aus der Kupplung herausgezogen werden kann. Nachteilig für eine beabsichtigte Anwendung in einer frostsicheren Außenarmatur ist hierbei einerseits, dass die Kupplung selbst jeweils in ihrer eingebauten Lage verbleibt, selbst also nicht der Wartung zugänglich wird. Außerdem ist eine recht komplexe Bewegung zum Aktivieren des Freigabemittels und zum Herausziehen des Rohres erforderlich, was aus einiger Entfernung wie durch einen Mauerdurchbruch hindurch nicht mehr ohne weiteres möglich ist.

In der deutschen Offenlegungsschrift mit der Veröffentlichungsnummer DE 15 50 566 A (siehe dort Fig. 5 und 6) ist ferner ein Ventileinsatz offenbart, der ein erstes Teil und ein zweites Teil aufweist, wobei das zweite Teil relativ zum ersten Teil verschiebbar ist. Der Ventileinsatz hat die Funktionen eines Rückflussverhinderers und ist aus Gebrauchsstellungen in eine Montage- und Demontagestellung und umgekehrt überführbar. In den Gebrauchsstellungen ist der Ventileinsatz zum Verhindern einer Durchströmung geschlossen oder zum Ermöglichen einer Durchströmung geöffnet. Die eine Gebrauchsstellung, bei der der Ventileinsatz zum Verhindern einer Durchströmung geschlossen ist, liegt vor, wenn ein Ventilteller des zweiten Teils an einem Ventilsitz des ersten Teils anliegt. Die andere Gebrauchsstellung, bei der der Ventileinsatz zum Ermöglichen einer Durchströmung geöffnet ist, wird erreicht, wenn der anstehende Flüssigkeitsdruck die Kraft einer Feder übersteigt und so den Ventilteller vom Ventilsitz wegbewegt. Durch einen Flansch des ersten Teils wird das erste Teil in den Gebrauchsstellungen des Ventileinsatzes gehalten. Durch ein Entfernen einer Überwurfschraube befindet sich der Ventileinsatz in der Montage- und Demontagestellung, in der der Ventileinsatz als eigenes Bauteil aus einem Ventilgehäuse entnommen werden kann.

Die Übertragung der technischen Lehre, wie sie aus der Offenlegungsschrift DE 15 50 566 A bekannt ist, auf einen Ventileinsatz für frostfreie Außenarmaturen ist nur eingeschränkt möglich. Insbesondere die Anordnung des Ventilsitzes an einem Ende und der Betätigungshandhabe am anderen Ende der Armatur steht einer einfachen Übertragung der technischen Lehre entgegen.

Es ergibt sich daraus die Aufgabenstellung, einen Ventileinsatz, insbesondere zur Verwendung in einer frostsicheren Außenarmatur zu schaffen, der eine einfache Wartbarkeit und Reparaturfähigkeit der Armatur ermöglicht.

Die Aufgabe wird erfindungsgemäß durch einen Ventileinsatz für eine Außenarmatur mit den Merkmalen des Anspruchs 1 gelöst. Ein solcher Ventileinsatz weist einen ersten Teil und einen zweiten Teil auf,
wobei das erste Teil Halteelemente aufweist, die in einer Gebrauchsstellung des in einem Gehäuseteil der Außenarmatur montierten Ventileinsatzes den ersten Teil des Ventileinsatzes relativ zu dem aufnehmenden Gehäuseteil halten, und wobei das zweite Teil relativ zum ersten Teil verschiebbar ist. Der Ventileinsatz weist ferner Mittel zum Überführen des Ventileinsatzes aus den Gebrauchsstellungen in eine Montage- bzw. Demontagestellung auf,
in welcher der Ventileinsatz in dem Gehäuseteil montierbar oder demontierbar ist. Die Mittel bewegen durch eine axiale Bewegung des zweiten Teils gegenüber dem ersten Teil die Halteelemente aus einer radial äußeren Position in eine radial innere Position, wodurch der Ventileinsatz aus den Gebrauchsstellungen in die Montage- und Demontagestellung überführbar ist.

Ein erfindungsgemäßer Ventileinsatz kann die gesamten funktionalen Innenteile, also Ventil, Ventilsitz und ggf. Rückflussverhinderer, in einer gemeinsamen Einheit umfassen, die im Einbauzustand, d.h. in einer der Gebrauchsstellungen reversibel steckbar in einer Halterung im Gehäuse gehalten werden, wobei einerseits Mittel vorgesehen sind, die eine Betätigung des Ventils im Einbauzustand erlauben, und andererseits Mittel vorgesehen sind, die zur Positionierung und Entfernung der Einheit in die bzw. aus der Halterung dienen.

Gemäß der Erfindung wird die Position der Halteelemente durch ein Überführen des Ventileinsatzes aus den Gebrauchsstellungen in die Montage- beziehungsweise Demontagestellung aus einer radial äußeren Position in eine radial innere Position bewegt und umgekehrt. Bei den Gebrauchsstellungen handelt es sich im übrigen um die Gebrauchsstellungen, in denen der Ventileinsatz zum Verhindern einer Durchströmung geschlossen ist beziehungsweise zum Ermöglichen einer Durchströmung geöffnet ist.

Gemäß der Erfindung wird das zweite Teil axial zu dem ersten Teil zum Überführen des Ventileinsatzes aus den Gebrauchsstellungen in die Montage- beziehungsweise Demontagestellung oder umgekehrt bewegt. Dabei übersetzen die Mittel zum Überführen eine axiale Bewegung des zweiten Teils zum Überführen des Ventileinsatzes aus den Gebrauchsstellungen in die Montage- beziehungsweise Demontagestellung oder umgekehrt in eine radiale Bewegung der Halteelemente.

Die Mittel zum Überführen können Spreizelemente, insbesondere Zungen aufweisen, an denen die Halteelemente angebracht sind. Die Zungen können zum Überführen des Ventileinsatzes aus den Gebrauchsstellungen in die Montage- beziehungsweise Demontagestellung verschwenkbar sein. Die Zungen können in den Gebrauchsstellungen und/oder der Montage- beziehungsweise Demontagestellung gespannt sein. Die Zungen sind dazu vorteilhaft elastisch.

Das erste Teil eines erfindungsgemäßen Ventileinsatzes umfasst vorzugsweise die Zungen.

Mittel zum Überführen des Ventileinsatzes aus den Gebrauchsstellungen in die Montage- beziehungsweise Demontagestellung oder umgekehrt können zum Führen der Zungen beim Überführen Führungselemente aufweisen. Das zweite Teil eines erfindungsgemäßen Ventileinsatzes umfasst vorteilhaft diese Führungselemente.

Die Zungen können gemäß der Erfindung einen ersten Abschnitt umfassen, in welchem die Außenflächen der Zungen einen Zylinder aufspannen. Die Zungen können ferner einen zweiten Abschnitt umfassen, in welchem die Zungen in den Gebrauchsstellungen nach außen gespreizt sind. Durch diese Spreizung der Zunge nach außen sind die Halteelemente auf ihre radial äußere Position gebracht. Die Außenflächen der Zungen können im zweiten Abschnitt in den Gebrauchsstellungen einen Kegelstumpf aufspannen.

Der erste Teil eines erfindungsgemäßen Ventileinsatzes umfasst vorteilhaft einen Ventilsitz. Der zweite Teil eines erfindungsgemäßen Ventileinsatzes umfasst vorteilhaft einen Ventilkegel.

Gemäß der Erfindung können an dem ersten Teil Mitnehmerelemente zur Mitnahme des ersten Teils durch das zweite Teil bei einer Demontage des Ventileinsatzes vorgesehen sein.

Gemäß der Erfindung kann der erste Teil des Ventileinsatzes eine Aufnahme für einen Rückflussverhinderer aufweisen. Dieser Rückflussverhinderer ist vorteilhaft in das erste Teil eingesteckt.

Eine erfindungsgemäße frostsichere Außenarmatur mit einem Gehäuseteil ist erfindungsgemäß so ausgestaltet, dass in dem Gehäuseteil ein Ventileinsatz, vorteilhaft ein Ventileinsatz der erfindungsgemäßen Art, entnehmbar eingesetzt ist.

Gemäß der Erfindung kann die Außenarmatur Betätigungsmittel zum Öffnen oder' Schließen der Außenarmatur haben. Der Ventileinsatz und die Betätigungsmittel können in den Gebrauchsstellungen über ein Koppelelement miteinander verbunden sein. Durch eine Betätigung der Betätigungsmittel kann der Ventileinsatz somit unter Zwischenschaltung des Koppelelements aus einer geöffneten Gebrauchsstellung in eine geschlossene Gebrauchsstellung und umgekehrt überführt werden.

Die Betätigungsmittel sind in den Gebrauchsstellungen des Ventileinsatzes in und/oder an einem weiteren Gehäuseteil der Außenarmatur angebracht. Das erste Gehäuseteil, in welchem der Ventileinsatz eingesetzt ist, und das weitere Gehäuseteil können über ein Rohr miteinander verbunden sein. Das Koppelelement ist dann vorzugsweise durch das Rohr geführt.

Die Betätigungsmittel sind gemäß der Erfindung vorteilhaft lösbar mit dem Koppelelement verbunden. Nach einem Lösen der Betätigungsmittel kann durch Herausziehen des Koppelelements aus dem Rohr der Ventileinsatz in die Montage beziehungsweise Demontagestellung überführt werden. Durch Einschieben des Ventileinsatzes und/oder des Koppelelementes in das Rohr wird der Ventileinsatz dagegen aus der Montage- beziehungsweise Demontagestellung in eine Gebrauchsstellung überführt.

Ein Ausführungsbeispiel für einen erfindungsgemäßen Ventileinsatz und eine erfindungsgemäße Außenarmatur wird im Folgenden anhand der Zeichnung näher beschrieben. In der Zeichnung zeigt
- Fig. 1: einen erfindungsgemäßen Ventileinsatz in einem eingebauten Zustand im Schnitt;
- Fig. 2: zwei Teile des erfindungsgemäßen Ventileinsatzes;
- Fig. 3: die beiden Teile aus Fig. 2 im zusammengefügten Zustand in einer Gebrauchstellung;
- Fig. 4: die beiden Teile aus Fig. 2 im zusammengefügten Zustand in einer Montage- bzw. Demontagestellung;
- Fig. 5: eine erfindungsgemäße frostsichere Außenarmatur mit dem erfindungsgemäßen Ventileinsatz.

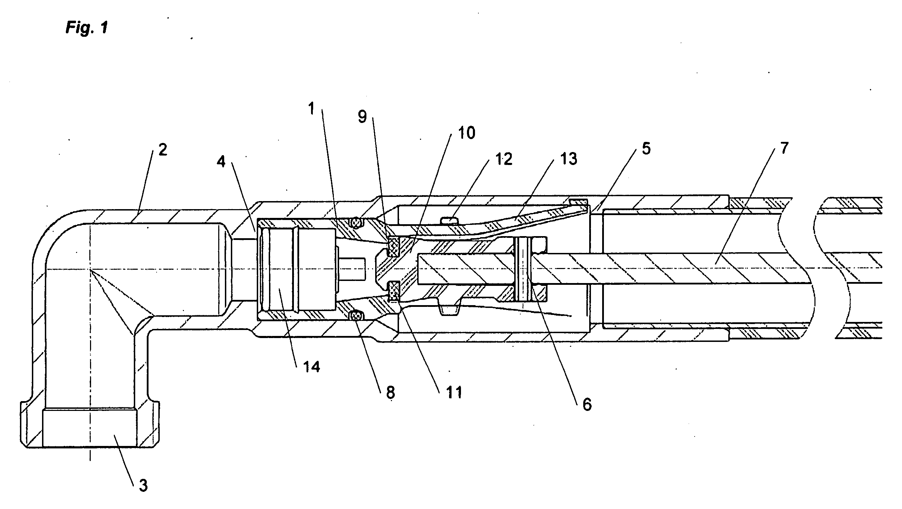

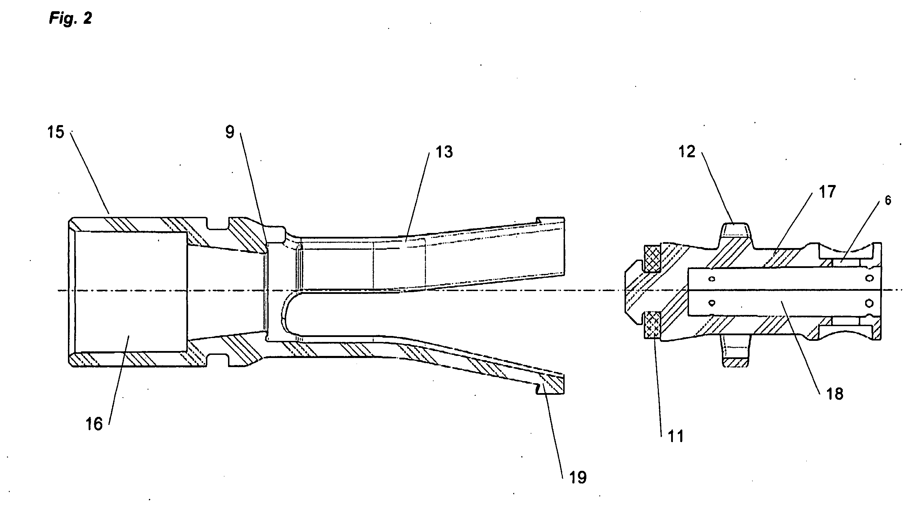

Zunächst wird auf den in den Figuren 1 bis 4 dargestellten Ventileinsatz Bezug genommen.

Der Ventileinsatz 1 kann in einem zu einem Gebäudeinnern weisenden Teil einer Außenarmatur eingebaut sein, wobei die Außenarmatur von einem Wassereingang 3 des Anschlussgehäuses 2 in Richtung zu einem nicht dargestellten Auslauf durchströmt werden kann. Die Außenarmatur weist eine Halterung 4, 5 für den Ventileinsatz auf, die vorzugsweise aus einem ersten Absatz 4 und einem zweiten Absatz 5 gebildet ist. Der Ventileinsatz 1 ist zwischen dem ersten Absatz 4 und dem zweiten Absatz 5 eingesetzt und einerseits auf dem ersten Absatz 4, andererseits auf dem zweiten Absatz 5 abgestützt.

Der Ventileinsatz 1 umfasst zwei jeweils vorzugsweise einstückig ausgeführte Teile 15, 17 auf, nämlich einerseits den im Anschlussgehäuse 2 feststehenden Teil 15 und andererseits einen beweglichen Teil 17.

An dem ersten Teil 15 sind ein Ventilsitz 9, sich axial erstreckende Zungen 13 und eine Aufnahme 16 für einen Rückflussverhinderer 14 ausgebildet. Die Zungen 13 weisen an ihren Enden jeweils Widerhaken 19 auf. Die Aufnahme für den Rückflussverhinderer 14 ist in Durchströmungsrichtung vor dem Ventilsitz 9 angeordnet. Das erste Teil 15 ist gegen das Anschlussgehäuse 2 mit einem Dichtmittel 8 abgedichtet, bei dem es sich im einfachsten Fall um einen O-Ring handelt.

An dem zweiten Teil 17 ist ein Ventilkegel 10 sowie Führungen 12 und ein Spindeleingriff 18 ausgebildet. An dem Ventilkegel 10 ist eine Sitzdichtung 11 angebracht.

Am zweiten Teil 17 ist mittels eines Befestigungsmittels, das beispielsweise durch eine Madenschraube 6 gebildet sein kann, ein Koppelelement 7 drehfest angebracht, das beispielsweise als Sechskantspindel ausgeführt ist und zu einer in den Figuren 1 bis 4 nicht dargestellten, dem Bediener zugänglichen Betätigungshandhabe führt.

Am zweiten Teil 17 sind ein oder mehrere, vorzugsweise drei symmetrisch um den Umfang angeordnete Führungen 12 vorgesehen, die von einer entsprechenden Anzahl mit dem Ventilsitz 9 verbundener Zungen 13 gleitend durchgriffen werden können.

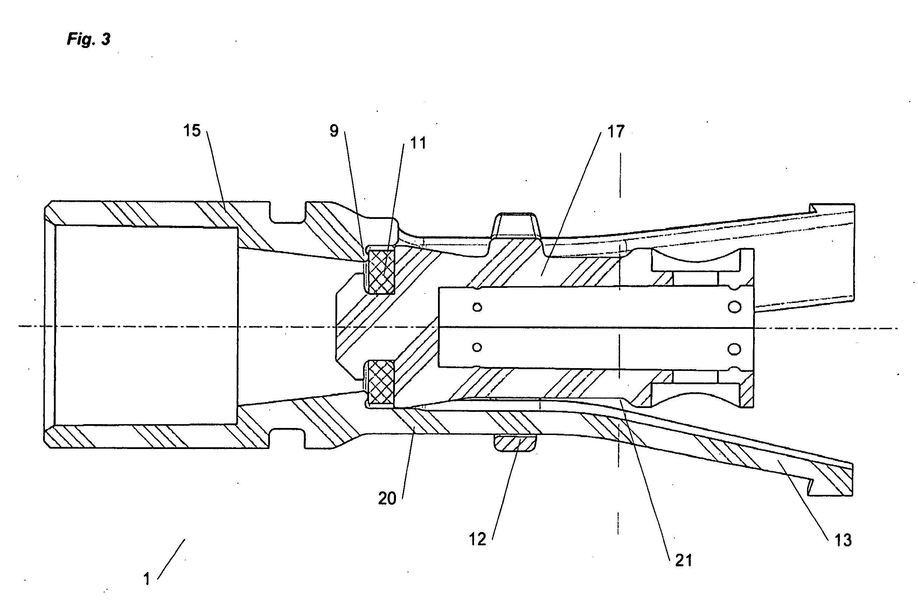

Der aus dem ersten Teil 15 und dem zweiten Teil 17 zusammengefügte Ventileinsatz 1 ist in Fig. 3 in einer Gebrauchstellung dargestellt, in der der Ventilkegel 10 auf dem Sitz 9 aufliegt und durch die Dichtung 11 abgedichtet wird. In dieser Gebrauchsstellung wäre ein Ventil, in welches der Ventileinsatz eingesetzt ist, also geschlossen.

Der Ventilkegel 10 ist, während seine Führungen 12 von den Zungen 13 durchgriffen werden, über einen zylindrisch ausgeführten Bereich 20 der Zungen 13 beweglich gelagert, der von einem Bereich 21 begrenzt wird, von dem ab die Zungen 13 seitlich auseinander laufen also abspreizen. Bis in diesen Bereich 21 kann das zweite Teil 17 bzw. der Ventilkegel 10 gegenüber dem ersten Teil 15 bzw. dem Ventilsitz 9 verschoben werden. Dadurch wird der Ventileinsatz 1 in eine zweite Gebrauchsstellung gebracht, in welcher das Ventil, in welches der Ventileinsatz eingesetzt ist, geöffnet wäre

Der Bereich 21 bezeichnet den maximalen Öffnungspunkt des Ventils, der durch den Bediener durch Betätigung der nicht dargestellten Handhabe und unter Zwischenschaltung des Koppelelementes 7 eingestellt werden kann.

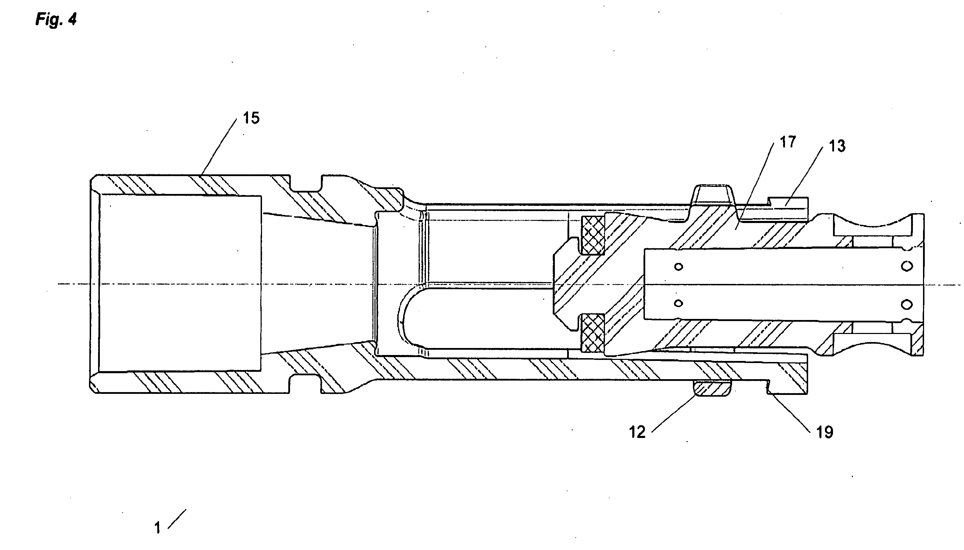

In Fig. 4 ist der Ventileinsatz 1 in der Montage- bzw. Demontagestellung gezeigt, wie sie beim Herausziehen des gesamten Ventileinsatzes 1 aus dem Anschlussgehäuse 2 eingenommen wird. Der Bediener übt über die hier nicht dargestellte Betätigungsvorrichtung und unter Zwischenschaltung des Koppelelementes 7 einen Zug auf das zweite Teil 17 aus, so dass das zweite Teil 17 über den Bereich 21 hinaus nach hinten gezogen wird. Die abgespreizten Abschnitte der Zungen 13 werden dabei durch die Führungen 12 zum zweiten Teil 17 bewegt, bis die Führungen 12 an den Widerhaken 19 der Zungen 13 anstoßen und die Zungen 13 flach am zweiten Teil 17 anliegen. Der Ventileinsatz 1 wird mit den nunmehr flach anliegenden Zungen 13 nicht länger durch den Absatz 5 des Anschlussgehäuses 2 fixiert, kann also komplett herausgezogen werden, was eine einfache Wartung außerhalb der Außenarmatur ermöglicht.

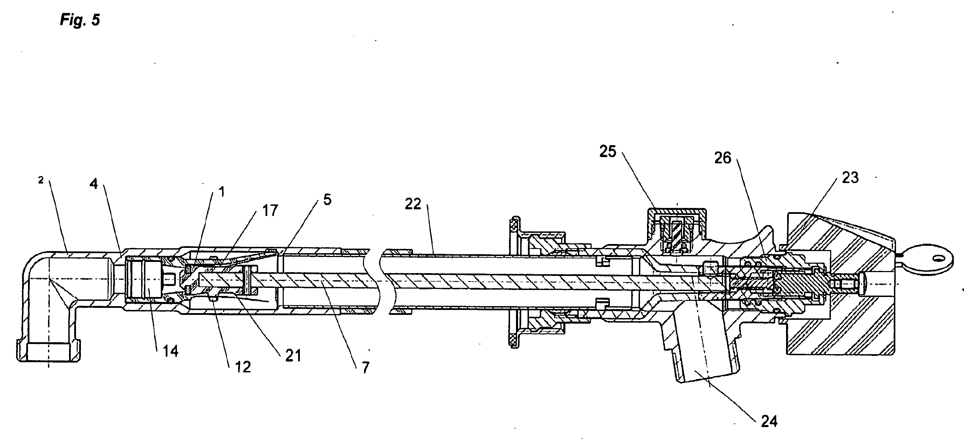

Fig. 5 zeigt die Verwendung des Ventileinsatzes 1 bei einer frostsicheren Außenarmatur. Gleichzeitig wird anhand dieser Figur auf die Funktionsweise eingegangen. Das Anschlussgehäuse 2 der Außenarmatur ist im Gebäudeinnern und damit frostgeschützt an eine nicht dargestellte Versorgungsleitung anschließbar. Ebenfalls noch im Gebäudeinnern und im frostgeschützten Bereich befindet sich dann der Ventileinsatz 1, der für die Regelung des Durchflusses durch die Außenarmatur verwendet wird. Der Durchgang der Außenarmatur durch die Außenwand wird über ein gemäß jeweiliger Außenwandstärke ablängbares Rohrstück 22 überbrückt, welches in das Anschlussgehäuse 2 eingesteckt ist und dort an den Absatz 5 anstößt.

Der Bediener kann über die Handhabe 23 und das Koppelelement 7 von außen den Öffnungsgrad des Ventileinsatzes 1 und damit den Ausflussvolumenstrom aus einem Ausfluss 24 bestimmen. Im dargestellten Beispiel führt eine Drehung an der Handhabe 23 durch Vermittlung des Trapezgewindes 27 zu einer drehfesten Linearverstellung der Lage des Koppelelements 7 und damit des Ventilkegels 10. Vom in der Fig. dargestellten Schließzustand kann der Ventileinsatz 1 geöffnet werden, bis das zweite Teil 17 den Bereich 21 erreicht hat.

Wird die Entnahme aus dem Ausfluss 24 durch Schließen des Ventileinsatzes 1 beendet, öffnet ein Belüfter 25, so dass das im Rohrstück 22 verbliebene Wasser noch durch den Ausfluss 24 abfließen kann. Die Außenarmatur wird ohne Durchfluss also belüftet bzw. entleert und ist dadurch gegen Beschädigung durch Einfrieren geschützt.

Zu Wartungszwecken des Ventileinsatzes 1 bzw. ggf. des Rückflussverhinderers 14 wird die Handhabe 23 von einer Kartusche 26 gelöst und die Kartusche 26 von der übrigen Außenarmatur entfernt, so dass das Koppelelement 7 zugänglich wird. Dieses kann nun in der Montage- bzw. Demontagestellung, wie in Fig. 4 gezeigt, mitsamt dem Ventileinsatz 1 herausgezogen werden, um diesen sehr einfach extern warten zu können.

Zum Einbau von Ventileinsatz 1 und Koppelelement 7 wird der Ventileinsatz in der Montage- bzw. Demontagestellung, wie in Fig. 4 gezeigt, eingesteckt und mit dem Koppelelement 7 in die Außenarmatur geschoben, bis der Ventileinsatz 1 wieder an dem Absatz 4 anstößt. Wird nun das Koppelelement 7 noch etwas weiter eingeschoben, gleiten das zweite Teil 17 und dessen angebrachte Führungen 12 über die anliegenden Zungen 13 und geben die abspreizenden Abschnitte der Zungen 13 dadurch frei. Die abgespreizten Zungen 13 treten wieder in eine Position, in der sie vom Absatz 5 gehalten werden, und der Ventileinsatz 1 ist damit wieder in seiner Gebrauchsstellung.

Das Zusammenwirken der Zungen 13 mit den Führungen 12, sowie dieser Kombination mit dem Koppelelement 7 ist im Schnitt C-C nochmals verdeutlicht.

Die übrigen in Fig. 5 dargestellten Komponenten der Außenarmatur sind dem Fachmann geläufig und bedürfen keiner weiteren Erläuterung.

## Patentansprüche

1. Ventileinsatz (1) für eine Außenarmatur wobei
- der Ventileinsatz (1) aus Gebrauchsstellungen in eine Montage- bzw. Demontagestellung und umgekehrt überführbar ist,
- der Ventileinsatz (1) in den Gebrauchsstellungen zum Verhindern einer Durchströmung geschlossen beziehungsweise zum Ermöglichen einer Durchströmung geöffnet ist,
- der Ventileinsatz (1) in der Montage- bzw. Demontagestellung in einem Gehäuseteil (2) der Außenarmatur montierbar oder demontierbar ist,
- der Ventileinsatz (1) ein erstes Teil (15) und ein zweites Teil (17) aufweist,
- wobei das erste Teil (15) Halteelemente (19) aufweist, die geeignet und eingerichtet sind, in den Gebrauchsstellungen des Ventileinsatzes (1) das erste Teil (15) des Ventileinsatzes (1) relativ zu dem aufnehmenden Gehäuseteil (2) zu halten,
- das zweite Teil (17) des Ventileinsatzes relativ zum ersten Teil (15) verschiebbar ist,
**dadurch gekennzeichnet, dass**
der Ventileinsatz (1) Mittel (12, 13) aufweist, die die Halteelemente (19) durch axiale Bewegung des zweiten Teils (17) gegenüber dem ersten Teil (15) aus einer radial äußeren Position in eine radial innere Position bewegen und **dadurch** den Ventileinsatz (1) aus den Gebrauchsstellungen in die Montage- bzw. Demontagestellung überführen.

2. Ventileinsatz nach Anspruch 1, **dadurch gekennzeichnet, dass** die Mittel (12, 13) zum Überführen Zungen (13) aufweisen, an denen die Halteelemente (19) angebracht sind.

3. Ventileinsatz nach Anspruch 2, **dadurch gekennzeichnet, dass** die Zungen (13) zum Überführen des Ventileinsatzes (1) aus den Gebrauchsstellungen in die Montage- bzw. Demontagestellung verschwenkbar sind.

4. Ventileinsatz nach Anspruch 2 oder 3, **dadurch gekennzeichnet, dass** die Zungen (13) in den Gebrauchsstellungen und/oder der Montage- bzw. Demontagestellung gespannt sind.

5. Ventileinsatz nach einem der Ansprüche 2 bis 4, **dadurch gekennzeichnet, dass** das erste Teil (15) die Zungen (13) umfasst.

6. Ventileinsatz nach einem der Ansprüche 2 bis 5, **dadurch gekennzeichnet, dass** die Mittel (12, 13) zum Überführen Führungselemente (12) zum Führen der Zungen (13) beim Überführen des Ventileinsatzes (1) aus den Gebrauchsstellungen in die Montage- bzw. Demontagestellung oder umgekehrt aufweisen.

7. Ventileinsatz nach Anspruch 6, **dadurch gekennzeichnet, dass** das zweite Teil (17) die Führungselemente (12) umfasst.

8. Ventileinsatz nach einem der Ansprüche 2 bis 7, **dadurch gekennzeichnet, dass** die Zungen (13) einen ersten Abschnitt umfassen, in welchem die Außenflächen der Zungen (13) einen Zylinder aufspannen.

9. Ventileinsatz nach Ansprüch 8, **dadurch gekennzeichnet, dass** die Zungen (13) einen zweiten Abschnitt umfassen, in welchem die Zungen (13) in den Gebrauchsstellungen nach außen gespreizt sind.

10. Ventileinsatz nach Anspruch 9, **dadurch gekennzeichnet, dass** Außenflächen der Zungen (13) im zweiten Abschnitt in den Gebrauchsstellungen einen Kegelstumpf aufspannen.

11. Ventileinsatz nach einem der Ansprüche 1 bis 10, **dadurch gekennzeichnet, dass** das erste Teil (15) einen Ventilsitz (9) umfasst.

12. Ventileinsatz nach einem der Ansprüche 1 bis 11, **dadurch gekennzeichnet, dass** das zweiten Teil (17) einen Ventilkegel (10) umfasst.

13. Ventileinsatz nach einem der Ansprüche 1 bis 12, **dadurch gekennzeichnet, dass** an dem ersten Teil (15) Mitnehmerelemente (19) zur Mitnahme des ersten Teils (15) durch das zweite Teil (17) bei einer Demontage des Ventileinsatzes (1) vorhanden sind.

14. Ventileinsatz nach einem der Ansprüche 1 bis 13, **dadurch gekennzeichnet, dass** die Montage bzw. die Demontage entlang derselben Achse wie die Ventilbetätigung erfolgt.

15. Ventileinsatz nach einem oder mehreren der Ansprüche 1 bis 14, **dadurch gekennzeichnet, dass** das erste Teil (15) eine Aufnahme (16) für einen Rückflussverhinderer (14) aufweist.

16. Frostsichere Außenarmatur mit einem Gehäuseteil (2),
**dadurch gekennzeichnet, dass**
in dem Gehäuseteil ein Ventileinsatz (1) nach einem oder mehreren der Ansprüche 1 bis 15 entnehmbar eingesetzt ist.

17. Außenarmatur nach Anspruch 16, **dadurch gekennzeichnet, dass** die Außenarmatur Betätigungsmittel (23, 26) zum Öffnen und/oder Schließen der Außenarmatur hat.

18. Außenarmatur nach Anspruch 17, **dadurch gekennzeichnet, dass** der Ventileinsatz (1) und die Betätigungsmittel (23, 26) in den Gebrauchsstellungen über ein Koppelelement (7) miteinander verbunden sind.

19. Außenarmatur nach Anspruch 18, **dadurch gekennzeichnet, dass** das Gehäuseteil (2) und ein weiteres Gehäuseteil über ein Rohr (22) miteinander verbunden sind, in dem das Koppelelement (7) geführt ist.

20. Außenarmatur nach einem der Ansprüche 16 bis 19, **dadurch gekennzeichnet, dass** die Betätigungsmittel (23, 26) von dem Koppelelement (7) lösbar sind.

21. Außenarmatur nach Anspruch 20, **dadurch gekennzeichnet, dass** nach einem Lösen der Betätigungsmittel (23, 26) durch Herausziehen des Koppelelements (7) aus dem Rohr (22) der Ventileinsatz (1) in die Montage- bzw. Demontagestellung überführbar ist.

22. Außenarmatur nach einem der Ansprüche 16 bis 21, **dadurch gekennzeichnet, dass** durch Einschieben des Ventileinsatzes (1) und des Koppelelementes (7) in das Rohr (22) der Ventileinsatz (1) aus der Montage- bzw. Demontagestellung in die Gebrauchsstellungen überführbar ist.

## Claims

1. Valve insert (1) for an outside tap, wherein
- the valve insert (1) can be transferred from use positions into an installation or removal position and vice versa,
- the valve insert (1) is closed to prevent and opened to enable a through-flow in the use positions,
- the valve insert (1) can be installed in a housing part (2) of the outside tap or removed therefrom in the installation or removal position,
- the valve insert (1) has a first part (15) and a second part (17),
- wherein the first part (15) has retaining elements (19) which are suitable and designed for retaining the first part (15) of the valve insert (1) relative to the receiving housing part (2) in the use positions of the valve insert (1),
- the second part (17) of the valve insert can be displaced relative to the first part (15),
**characterized in that**
the valve insert (1) has means (12, 13) which, as a result of a movement of the second part (17) axially in relation to the first part (15), move the retaining elements (19) from a radially outer position into a radially inner position and thereby transfer the valve insert (1) from the use positions into the installation or removal position.

2. Valve insert according to Claim 1, **characterized in that** the transfer means (12, 13) have tongues (13) on which the retaining elements (19) are mounted.

3. Valve insert according to Claim 2, **characterized in that** the tongues (13) can be pivoted in order to transfer the valve insert (1) from the use positions into the installation or removal position.

4. Valve insert according to Claim 2 or 3, **characterized in that** the tongues (13) are braced in the use positions and/or the installation or removal position.

5. Valve insert according to one of Claims 2 to 4, **characterized in that** the first part (15) comprises the tongues (13).

6. Valve insert according to one of Claims 2 to 5, **characterized in that** the transfer means (12, 13) have guide elements (12) for guiding the tongues (13) when the valve insert (1) is transferred from the use positions into the installation or removal position or vice versa.

7. Valve insert according to Claim 6, **characterized in that** the second part (17) comprises the guide elements (12).

8. Valve insert according to one of Claims 2 to 7, **characterized in that** the tongues (13) comprise a first section in which the outer surfaces of the tongues (13) span a cylinder.

9. Valve insert according to Claim 8, **characterized in that** the tongues (13) comprise a second section in which the tongues (13) are splayed outwards in the use positions.

10. Valve insert according to Claim 9, **characterized in that** outer surfaces of the tongues (13) in the second section span a truncated cone in the use positions.

11. Valve insert according to one of Claims 1 to 10, **characterized in that** the first part (15) comprises a valve seat (9).

12. Valve insert according to one of Claims 1 to 11, **characterized in that** the second part (17) comprises a valve cone (10).

13. Valve insert according to one of Claims 1 to 12, **characterized in that** entrainment elements (19) for the entrainment of the first part (15) by the second part (17) when the valve insert (1) is removed are present on the first part (15).

14. Valve insert according to one of Claims 1 to 13, **characterized in that** the installation or removal takes place along the same axis as the valve actuation.

15. Valve insert according to one or more of Claims 1 to 14, **characterized in that** the first part (15) has a receptacle (16) for a backflow preventer (14).

16. Frost-protected outside tap having a housing part (2),
**characterized in that**
a valve insert (1) according to one or more of Claims 1 to 15 is inserted removably in the housing part.

17. Outside tap according to Claim 16, **characterized in that** the outside tap has actuation means (23, 26) for opening and/or closing the outside tap.

18. Outside tap according to Claim 17, **characterized in that** the valve insert (1) and the actuation means (23, 26) are connected to one another in the use positions via a coupling element (7).

19. Outside tap according to Claim 18, **characterized in that** the housing part (2) and a further housing part are connected to one another via a pipe (22) in which the coupling element (7) is guided.

20. Outside tap according to one of Claims 16 to 19, **characterized in that** the actuation means (23, 26) can be detached from the coupling element (7).

21. Outside tap according to Claim 20, **characterized in that** after the actuation means (23, 26) have been detached, the valve insert (1) can be transferred to the installation or removal position by pulling the coupling element (7) out of the pipe (22).

22. Outside tap according to one of Claims 16 to 21, **characterized in that** by pushing the valve insert (1) and the coupling element (7) into the pipe (22), the valve insert (1) can be transferred out of the installation or removal position and into the use positions.

## Revendications

1. Insert de soupape (1) pour un robinet extérieure :
- l'insert de soupape (1) pouvant être amené à partir de positions d'utilisation dans une position de montage et/ou de démontage et inversement ;
- l'insert de soupape (1) étant fermé pour empêcher un écoulement et/ou ouvert pour permettre un écoulement dans les positions d'utilisation ;
- l'insert de soupape (1) se trouvant dans la position de montage et/ou de démontage pouvant être monté ou démonté dans une partie de boîtier (2) du robinet extérieure ;
- l'insert de soupape (1) comportant une première partie (15) et une deuxième partie (17) ;
la première partie (15) comportant des éléments d'arrêt (19) qui sont adaptés et disposés de façon à maintenir dans les positions d'utilisation de l'insert de soupape (1) la première partie (15) de l'insert de soupape (1) par rapport à la partie de boîtier (2) à loger ;
la deuxième partie (17) de 1' insert de soupape pouvant être déplacée par rapport à la première partie (15) ;
**caractérisé en ce que** :
l'insert de soupape (1) comporte des moyens (12, 13) qui déplacent les éléments d'arrêt (19) par mouvement axial de la deuxième partie (17) par rapport à la première partie (15) en passant d'une position extérieure dans le plan radial à une position intérieure dans le plan radial et **caractérisé en ce que** le mécanisme de soupape (1) permet de passer des positions d'utilisation dans la position de montage et/ou de démontage.

2. Insert de soupape selon la revendication 1, **caractérisé en ce que** les moyens (12, 13) d'amenée comportent des languettes (13) au niveau desquelles les éléments d'arrêt (19) sont disposés.

3. Insert de soupape selon la revendication 2, **caractérisé en ce que** les languettes (13) sont pivotées pour amener le mécanisme de soupape (1) des positions d'utilisation dans la position de montage et/ou de démontage.

4. Insert de soupape selon la revendication 2 ou 3, **caractérisé en ce que** les languettes (13) sont tendues dans les positions d'utilisation et/ou dans la position de montage et/ou de démontage.

5. Insert de soupape selon l'une quelconque des revendications 2 à 4, **caractérisé en ce que** la première partie (15) comprend les languettes (13).

6. Insert de soupape selon l'une quelconque des revendications 2 à 5, **caractérisé en ce que** les moyens (12, 13) d'amenée comportent des éléments de guidage (12) pour amener les languettes (13) lors de l'amenée de l'insert de soupape (1) des positions d'utilisation dans la position de montage et/ou de démontage ou inversement.

7. Insert de soupape selon la revendication 6, **caractérisé en ce que** les éléments de guidage (12) se trouvent dans la deuxième partie (17).

8. Insert de soupape selon l'une quelconque des revendications 2 à 7, **caractérisé en ce que** les languettes (13) comprennent un premier segment dans lequel les surfaces extérieures des languettes (13) enserrent un cylindre.

9. Insert de soupape selon la revendication 8, **caractérisé en ce que** les languettes (13) comprennent un deuxième segment dans lequel les languettes (13) sont écartées vers l'extérieur dans les positions d'utilisation.

10. Insert de soupape selon la revendication 9, **caractérisé en ce que** les surfaces extérieures des languettes (13) enserrent un tronc conique dans le deuxième segment dans les positions d'utilisation.

11. Insert de soupape selon l'une quelconque des revendications 1 à 10, **caractérisé en ce que** la première partie (15) comprend un siège de soupape (9).

12. Insert de soupape selon l'une quelconque des revendications 1 à 11, **caractérisé en ce que** la deuxième partie (17) comprend un cône de soupape (10).

13. Insert de soupape selon l'une quelconque des revendications 1 à 12, **caractérisé en ce qu'**au niveau de la première partie (15), on trouve des éléments d'engrenage (19) pour engrener la première partie (15) avec la deuxième partie (17) lors d'un démontage du mécanisme de soupape (1).

14. Insert de soupape selon l'une quelconque des revendications 1 à 13, **caractérisé en ce que** le montage et/ou le démontage se produisent le long du même axe que l'actionnement de soupape.

15. Insert de soupape selon l'une quelconque des revendications 1 à 14 ou plusieurs d'entre elles, **caractérisé en ce que** la première partie (15) comporte un logement (16) pour le système anti-reflux (14).

16. Robinet extérieure protégée contre le gel avec une partie de boîtier (2), **caractérisée en ce que** dans la partie de boîtier, un insert de soupape (1) selon l'une quelconque des revendications 1 à 15 ou plusieurs d'entre elles est inséré de façon à pouvoir être retiré.

17. Robinet extérieure selon la revendication 16, **caractérisée en ce que** le robinet extérieure comporte des moyens d'actionnement (23, 26) pour ouvrir et/ou fermer l'armature extérieure.

18. Robinet extérieure selon la revendication 17, **caractérisée en ce que** l'insert de soupape (1) et les moyens d'actionnement (23, 26) sont reliés entre eux dans les positions d'utilisation via un élément de couplage (7).

19. Robinet extérieure selon la revendication 18, **caractérisée en ce que** la première partie de boîtier (2) et une autre partie de boîtier sont reliées entre elles via un tube (22) dans lequel est introduit l'élément de couplage (7).

20. Robinet extérieure selon l'une quelconque des revendications 16 à 19, **caractérisée en ce que** les moyens d'actionnement (23, 26) peuvent être retirés de l'élément de couplage (7).

21. Robinet extérieure selon la revendication 20, **caractérisée en ce qu'**après libération des moyens d'actionnement (23, 26) par retrait de l'élément de couplage (7) hors du tube (22), l'insert de soupape (1) peut être amené dans la position de montage et/ou de démontage.

22. Robinet extérieure selon l'une quelconque des revendications 16 à 21, **caractérisée en ce que** l'insertion du insert de soupape (1) et de l'élément de couplage (7) dans le tube (22) permet d'amener l'insert de soupape (1) de la position de montage et/ou de démontage dans les positions d'utilisation.
